# FASCICULE DE BREVET EUROPEEN

(11) **EP 2 577 079 B1**
(45) Date de publication et mention de la délivrance du brevet: **26.02.2014**
(21) Numéro de dépôt: 11726874.8
(22) Date de dépôt: 16.05.2011
(51) Int. Cl.: F16C 17/06, F16C 41/02, F16C 23/04

(54) **BUTÉE À PATINS ET MACHINE TOURNANTE COMPRENANT UNE TELLE BUTÉE**
KISSENARTIGES SCHUBLAGER UND DREHMASCHINE MIT EINEM DERARTIGEN SCHUBLAGER
PAD-TYPE THRUST BEARING AND ROTARY MACHINE COMPRISING SUCH A THRUST BEARING

(30) Priorité: 02.06.2010 FR 1054312
(43) Date de publication de la demande: 10.04.2013
(73) Titulaire: ALSTOM Renewable Technologies, 38100 Grenoble (FR)
(72) Inventeur: MELET, Luc, F-38430 Moirans (FR)
(74) Mandataire: Pesce, Michele
(86) Numéro de dépôt international: PCT/FR2011/051088
(87) Numéro de publication internationale: WO 2011/151555

(56) Documents cités:
- EP-A2- 0 511 772
- DE-A1- 4 021 053
- FR-A- 1 200 013
- FR-A5- 2 041 449
- GB-A- 1 458 660
- US-A- 1 425 979

## Description

L'invention concerne une butée à patins pour une machine tournante.

Il est connu de FR-A-1 200 013 et FR-A-1 141 857 d'assurer la répartition de la charge appliquée sur des patins appartenant à un premier élément en liaison pivot avec un second élément, au moyen d'une butée à patins constituée de disques qui recouvrent de manière étanche des cavités reliées entre elles par des conduits et qui renferment un liquide sous pression, chaque patin venant en appui sur un disque. En fonctionnement, lorsqu'un défaut géométrique quelconque apparaît au niveau des éléments en liaison pivot, il est sensiblement instantanément annulé par une déformation des disques engendrée lors d'une phase transitoire, durant laquelle se produit un transfert de fluide entre les cavités, qui maintient la charge exercée par les patins aux disques à une valeur sensiblement constante. La procédure de remplissage d'un tel dispositif est complexe car le liquide doit occuper la totalité de l'espace des cavités et des conduits de liaison. De plus, ce dispositif présente des risques de fuite du liquide et d'intrusion d'air au niveau des surfaces de contact entre les éléments qui forment les cavités et les conduits. Enfin, les opérations de maintenance sont longues et nécessitent l'arrêt du dispositif afin de vider le liquide, démonter le système et le remplir à nouveau, ce qui est coûteux.

DE-A-40 21 053 montre une butée à patins dans laquelle un fluide est confiné dans plusieurs enveloppes reliées entre elles par des conduits. L'ensemble formé par l'assemblage des enveloppes et des conduits présente des risques de fuite du liquide et d'intrusion de bulles d'air au niveau des liaisons entre les enveloppes et les conduits.

Le but de l'invention est de simplifier l'installation et la maintenance d'une butée à patins et d'en améliorer la fiabilité.

A cet effet, l'invention a pour objet une butée à patins définie selon la revendication 1.

Ainsi, le liquide est confiné dans un chapelet de vessies qui forme le sous-ensemble fonctionnel et qui le dissocie des autres éléments constitutifs de la butée à patins. Un chapelet souple en un seul tenant simplifie la procédure de remplissage, limite les problèmes de fuites ainsi que les risques d'intrusion de bulles d'air et permet de réduire la durée et la complexité des opérations de maintenance. En effet, il peut être acheminé déjà rempli sur son site d'utilisation.

Selon des aspects avantageux de l'invention, une telle butée à patins peut incorporer une ou plusieurs des caractéristiques suivantes, prises dans toute combinaison techniquement admissible :
- Les demi-coques et les gaines sont en acier, et les vessies et les tuyaux souples sont en élastomère.
- Les deux extrémités du sous-ensemble fonctionnel ne sont pas raccordées entre elles.
- La butée est munie d'un capteur qui mesure la pression du liquide dans le volume fermé.
- Les enveloppes ont la géométrie d'un cylindre de faible épaisseur dont les faces supérieures et inférieures sont délimitées par deux disques horizontaux en situation installée et qui présente un bourrelet annulaire à sa périphérie.
- Le sous-ensemble fonctionnel est globalement circulaire, centré sur un axe vertical en situation installée et situé dans un plan perpendiculaire à cet axe.

L'invention concerne également une machine tournante comprenant une partie tournante solidaire en rotation avec un anneau reposant sur un film d'huile en contact avec des patins d'une butée telle que mentionnée ci-dessus, la butée étant en appui sur une partie fixe de la machine tournante.

L'invention sera mieux comprise et d'autres avantages de celles-ci apparaîtront plus clairement à la lumière de la description qui va suivre d'une butée à patins conforme à l'invention, donnée uniquement à titre d'exemple et faite en référence aux dessins annexés dans lesquels :
- la figure 1 est une coupe partielle de principe d'une turbine hydraulique incorporant une butée à patins conforme à l'invention ;
- la figure 2 est une vue en perspective d'un chapelet d'enveloppes déformables appartenant à la butée représentée à la figure 1 ;
- la figure 3 est une vue éclatée en perspective du détail III à la figure 2 ; et
- la figure 4 est une coupe à plus grand échelle selon la ligne IV-IV à la figure 2.

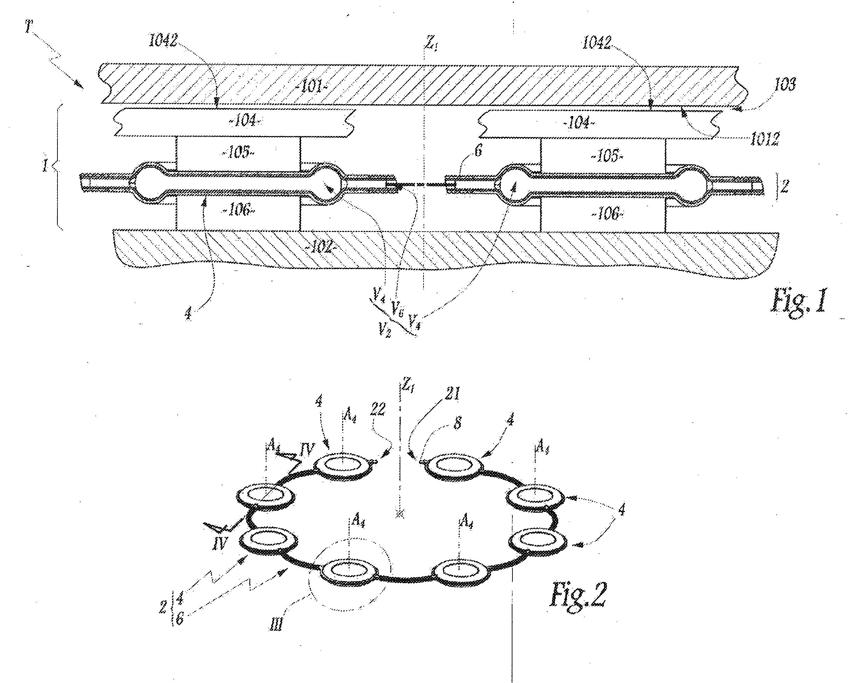

Une turbine hydraulique T est partiellement représentée à la figure 1 et comprend un anneau 101 solidaire en rotation de la roue d'une turbine T qui n'est pas représentée et qui tourne autour d'un axe vertical Z₁ lorsque la turbine T fonctionne. L'anneau 101 est supporté par rapport à une structure fixe 102 au moyen d'un palier formé par un film d'huile 103 défini entre la surface inférieure 1012 de l'anneau 101 et les surfaces supérieures respectives 1042 de huit patins 104 régulièrement répartis autour de l'axe Z₁.

Les patins 104 appartiennent à une butée 1 à patins qui permet d'ajuster la hauteur des différentes surfaces 1042 par rapport à la structure 102, pour garantir la continuité du film d'huile 103. La butée 1 comprend, outre les patins 104, un bloc de transfert de charge 105 et une entretoise 106 disposés l'un en dessous de l'autre sous chaque patin 104. Entre chaque bloc de transfert de charge 105 et l'entretoise 106 disposée en dessous de lui, il est prévu une enveloppe déformable 4 dont le volume intérieur V₄ forme une cavité. Ainsi, le nombre d'enveloppes 4 est égal au nombre de patins 104 de la turbine T.

Un sous-ensemble fonctionnel 2, en forme de chapelet, est constitué par les huit enveloppes 4 et les sept conduits 6 qui les relient entre elles. Ce sous-ensemble peut être manipulé de façon unitaire, indépendamment des autres pièces constitutives de la butée 1.

La butée 1 à patins a pour fonction d'assurer une répartition homogène d'une charge appliquée par la turbine T sur les patins 104.

On note V₆ le volume intérieur d'un conduit 6. Les volumes V₄ et les volumes V₆ constituent ensemble le volume intérieur fermé V₂ du chapelet 2. Les enveloppes 4 sont convexes. Elles entourent chacune un volume V₄ par le dessus, par le dessous et par les côtés, sauf au niveau de la jonction avec les conduits 6.

Le volume V₂ du chapelet 2 est entièrement rempli d'un liquide 10 pouvant, par exemple, être de l'huile, de l'eau additivée ou du silicone liquide. Le chapelet 2 constitue donc un sous-ensemble de circulation du liquide 10. En d'autres termes, le liquide 10 peut circuler librement à l'intérieur du volume V₂ et le chapelet 2 est dissociable des autres pièces mécaniques qui constituent la butée 1. En configuration installée, le chapelet 2 est fixe et encaisse, au niveau des enveloppes déformables 4 et par l'intermédiaire des patins 104, des blocs 105 et des entretoises 106, une charge provenant de l'anneau 101.

Le chapelet 2 est globalement circulaire, centré sur l'axe Z₁ et situé dans un plan perpendiculaire à l'axe Z₁ Les enveloppes sont en forme de cylindres d'axe A₄ parallèle à l'axe Z₁ de faible épaisseur, la distance radiale entre les axes Z₁ et A₄ étant égale au rayon du cercle décrit par le chapelet 2. La circonférence des enveloppes 4 est bordée d'un bourrelet torique ayant son axe de révolution confondu avec l'axe A₄. Les conduits 6 sont des tubes de section ronde dont l'axe longitudinal présente un rayon de courbure égal au ou voisin du rayon du cercle décrit par le chapelet 2.

En fonctionnement, les différences de charge appliquées par les éléments 104 à 106 sur les enveloppes 4 sont compensées par de faibles déplacements des enveloppes 4 provoqués par la pression du liquide 10 à l'intérieur du chapelet 2. De cette façon la charge appliquée aux enveloppes 4 est uniformément répartie sur chacune des enveloppes 4.

Les enveloppes déformables 4 présentes à chaque extrémité 21 et 22 du chapelet 2 ne sont pas raccordées entre elles, ce qui permet de remplir facilement le chapelet 2 par une extrémité 21, la deuxième extrémité 22 étant bouchée. En variante, le chapelet 2 peut aussi former une boucle fermée, permettant lors des variations de la charge un déplacement plus rapide du liquide 10 et donc un rééquilibrage des charges plus rapide.

Lors du remplissage du chapelet 2, le liquide 10 est à la pression atmosphérique. La pression interne du liquide 10 résulte de la mise en charge des enveloppes 4 lorsque le chapelet 2 est en configuration installée et supporte les charges appliquées par les patins 104.

Un capteur 8 est intégré au chapelet 2 pour mesurer la pression du liquide 10 dans le volume V₂. Le capteur est, en pratique, placé sur l'extrémité 21 du chapelet 2, l'autre extrémité 22 étant munie d'un dispositif non représenté de remplissage du chapelet 2, tel qu'un bouchon à vis ou une valve. Le capteur 8 émet, à destination d'une unité de commande non représentée, un signal représentatif de la pression du liquide 10. Ce signal permet de détecter une éventuelle fuite de liquide 10.

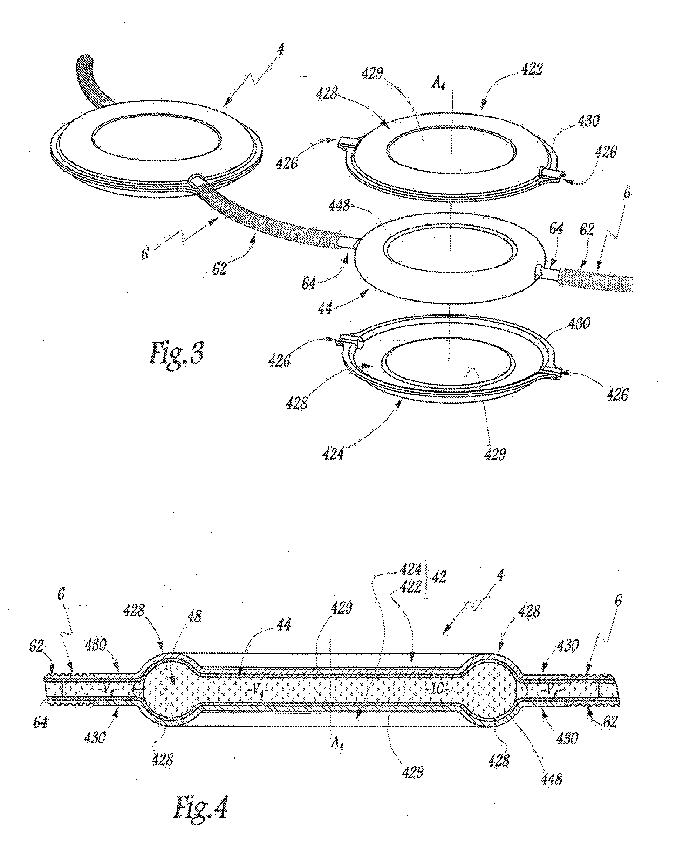

Comme il ressort plus particulièrement des figures 3 et 4, chaque enveloppe 4 comprend une coque bipartite 42 qui comprend deux demi-coques rigides 422 et 424 entre lesquelles est disposée une vessie souple 44. Chaque conduit 6 comprend une gaine rigide 62 dans laquelle est inséré un tuyau souple 64.

Les demi-coques rigides 422 et 424 comprennent chacune un disque 429, perpendiculaire à l'axe Z₁ en configuration installée, qui présente un bourrelet 428 de section semi-circulaire à sa périphérie. Les demi-coques 422 et 424 sont ainsi convexes. Une portion annulaire plane 430 prolonge le disque 429 à l'extérieur du bourrelet 428 pour permettre la mise en contact de chaque paire de demi-coques 422 et 424 lors de l'assemblage du chapelet 2. Des canaux de liaison 426 d'axe longitudinal radial et de section semi-circulaire, sont situés en deux points diamétralement opposés de la portion annulaire plane 430 et permettent de raccorder les demi-coques 422 et 424 aux gaines 62 en autorisant la circulation du liquide 10 entre les vessies souples 44 et les tuyaux 64.

Chaque vessie 44 est pourvue d'une partie radiale externe 448 qui épouse la forme intérieure des bourrelets 428. Ainsi, chaque enveloppe 4 présente, à sa périphérie, un bourrelet annulaire 48 rempli de liquide 10 et à section circulaire.

En pratique, les vessies 44 et les tuyaux 64 peuvent être en élastomère et les demi-coques rigides 422 et 424 et les gaines 62 en acier.

Les vessies souples 44 ont une géométrie complémentaire de celle des surfaces en vis-à-vis des demi-coques 422 et 424, de manière à permettre leur encapsulage entre les demi-coques.

Le sous-ensemble 2 peut être constitué par le raccordement des vessies 44 et des tuyaux 64 préalablement revêtus de leurs gaines 64, puis par la mise en place des demi-coques 422 et 424. Ce sous-ensemble ou chapelet 2 peut être rempli en liquide 10 sur son site de fabrication avant d'être expédié sur son site d'utilisation où il peut être manipulé comme un organe autonome et mis en place entre les éléments 105 et 106 de la butée 1, sans nécessiter de remplissage en liquide 10.

Ceci est avantageux non seulement lors de la mise en place de la turbine T mais également lors d'une opération de maintenance au cours de laquelle le chapelet 2 peut faire l'objet d'un échange standard.

La figure 2 montre un chapelet 2 qui comporte huit enveloppes 4 et huit patins 104. En variante non représentée, la butée 1 peut comporter un nombre de patins 104 différent de huit et le chapelet 2 autant d'enveloppes 4 que le nombre de patins 104.

Dans une variante non représentée de l'invention, l'axe longitudinal des conduits 6 peut avoir un rayon de courbure différent du rayon du cercle décrit par le chapelet 2, par exemple un rayon de courbure supérieur au rayon du cercle décrit par le chapelet 2. Par ailleurs, la section des conduits peut ne pas être circulaire.

Les enveloppes 4 définissent, de par leurs volumes intérieurs respectifs V₄, un ensemble de cavités qui existent indépendamment des patins 104 et des entretoises 106. En d'autres termes, les enveloppes 4 délimitent le contour de ces cavités.

En variante, les conduits 6 peuvent ne pas être en partie composés d'acier, mais par exemple entièrement en matériau thermoplastique.

La butée 1 à patins décrite ci-dessus est représentée pour une turbine. Cependant, l'invention peut s'appliquer à toute machine hydraulique tournante, voire à une machine tournante autre que hydraulique, par exemple à un alternateur, à une machine outil ou à un télescope.

## Revendications

1. Butée (1) à patins comprenant un anneau (101) supporté par une structure fixe (102) au moyen d'un palier formé par un film d'huile (103) défini entre l'anneau (101) et les patins (104), dans laquelle chaque patin (104) repose sur un volume de liquide (10) enfermé dans une cavité (V₄) reliée à des cavités voisines par des conduits (6), la butée (1) comprenant plusieurs enveloppes convexes (4) délimitant chacune à elle seule la cavité (V₄) et reliées entre elles par les conduits (6), les enveloppes convexes et les conduits formant ensemble un sous-ensemble fonctionnel (2) creux qui est dissocié des autres éléments constitutifs de la butée (1) et qui délimite un volume fermé (V₂) rempli par le liquide (10),
**caractérisée en ce que** chaque enveloppe (4) comprend deux demi-coques (422, 424) disposées de part et d'autre d'une vessie souple (44) et **en ce que** chaque conduit (6) comprend un tuyau souple (64) inséré dans une gaine (62).

2. Butée (1) à patins selon la revendication 1, **caractérisée en ce que** les demi-coques (422, 424) et les gaines (62) sont en acier.

3. Butée (1) à patins selon l'une des revendications précédentes, **caractérisée en ce que** les vessies (44) et les tuyaux souples (64) sont en élastomère.

4. Butée (1) à patins selon l'une des revendications précédentes, **caractérisée en ce que** les deux extrémités (21, 22) du sous-ensemble fonctionnel (2) ne sont pas raccordées entre elles.

5. Butée (1) à patins selon l'une des revendications précédentes, **caractérisée en ce qu'**elle est munie d'un capteur (8) qui mesure la pression du liquide (10) dans le volume fermé (V₂).

6. Butée (1) à patins selon les revendications 4 et 5, **caractérisée en ce que** le capteur (8) est placé sur une extrémité (21) du sous-ensemble fonctionnel (2).

7. Butée (1) à patins selon la revendication 4 **caractérisée en ce qu'**une extrémité (21, 22) du sous-ensemble fonctionnel (2) est munie d'un dispositif de remplissage du sous-ensemble fonctionnel (2).

8. Butée (1) à patins selon l'une des revendications précédentes, **caractérisée en ce que** les enveloppes (4) ont la géométrie d'un cylindre d'axe (A₄) de faible épaisseur dont les faces supérieures et inférieures sont délimitées par deux disques (429) horizontaux en situation installée et qui présente un bourrelet annulaire (48) à sa périphérie.

9. Butée (1) à patins selon l'une des revendications précédentes, **caractérisée en ce que** le sous-ensemble fonctionnel (2) est globalement circulaire, centré sur un axe (Z₁) vertical en situation installée et situé dans un plan perpendiculaire à l'axe (Z₁).

10. Machine tournante (T) comprenant une partie tournante solidaire en rotation avec un anneau (101) reposant sur un film d'huile (103) en contact avec des patins (104) d'une butée (1) selon l'une des revendications précédentes, la butée (1) étant en appui sur une partie fixe (102) de la machine tournante (T).

## Patentansprüche

1. Axiallager (1) mit Blöcken, das einen Ring (101) aufweist, der von einer ortsfesten Struktur (102) mittels eines von einem zwischen dem Ring (101) und den Blöcken (104) definierten Ölfilm (103) gebildeten Lagers getragen wird, wobei jeder Block (104) auf einem Flüssigkeitsvolumen (10) ruht, das in einem Hohlraum (V₄) eingeschlossen ist, der mit benachbarten Hohlräumen durch Kanäle (6) verbunden ist, wobei das Axiallager (1) mehrere konvexe Hüllen (4) enthält, von denen jede alleine den Hohlraum (V₄) begrenzt und die miteinander durch die Kanäle (6) verbunden sind, wobei die konvexen Hüllen und die Kanäle zusammen eine hohle Funktionsteileinheit (2) formen, die von den anderen Bestandteilen des Axiallagers (1) getrennt ist und die ein mit der Flüssigkeit (10) gefülltes, geschlossenes Volumen (V₂) definiert, **dadurch gekennzeichnet, dass** jede Hülle (4) zwei Halbschalen (422, 424) enthält, die zu beiden Seiten einer elastischen Blase (44) angeordnet sind, und dass jeder Kanal (6) einen in einen Mantel (62) eingeführten Schlauch (64) enthält.

2. Axiallager (1) mit Blöcken nach Anspruch 1, **dadurch gekennzeichnet, dass** die Halbschalen (422, 424) und die Mäntel (62) aus Stahl sind.

3. Axiallager (1) mit Blöcken nach einem der vorhergehenden Ansprüche, **dadurch gekennzeichnet, dass** die Blasen (44) und die Schläuche (64) aus Elastomermaterial sind.

4. Axiallager (1) mit Blöcken nach einem der vorhergehenden Ansprüche, **dadurch gekennzeichnet, dass** die zwei Enden (21, 22) der Funktionsteileinheit (2) nicht miteinander verbunden sind.

5. Axiallager (1) mit Blöcken nach einem der vorhergehenden Ansprüche, **dadurch gekennzeichnet, dass** es mit einem Sensor (8) versehen ist, der den Druck der Flüssigkeit (10) im geschlossenen Volumen (V₂) misst.

6. Axiallager (1) mit Blöcken nach den Ansprüchen 4 und 5, **dadurch gekennzeichnet, dass** der Sensor (8) an einem Ende (21) der Funktionsteileinheit (2) angeordnet ist.

7. Axiallager (1) mit Blöcken nach Anspruch 4, **dadurch gekennzeichnet, dass** ein Ende (21, 22) der Funktionsteileinheit (2) mit einer Füllvorrichtung der Funktionsteileinheit (2) versehen ist.

8. Axiallager (1) mit Blöcken nach einem der vorhergehenden Ansprüche, **dadurch gekennzeichnet, dass** die Hüllen (4) die Geometrie eines Zylinders mit einer Achse (A₄) geringer Dicke haben, dessen Ober- und Unterseiten von zwei in der eingebauten Situation waagrechten Scheiben (429) begrenzt werden und der einen ringförmigen Wulst (48) an seinem Umfang aufweist.

9. Axiallager (1) mit Blöcken nach einem der vorhergehenden Ansprüche, **dadurch gekennzeichnet, dass** die Funktionsteileinheit (2) in der eingebauten Situation global kreisförmig, auf eine senkrechte Achse (Z₁) zentriert ist und sich in einer Ebene lotrecht zur Achse (Z₁) befindet.

10. Drehende Maschine (T), die einen drehenden Teil drehfest mit einem Ring (101) verbunden enthält, der auf einem Ölfilm (103) in Kontakt mit Blöcken (104) eines Axiallagers (1) nach einem der vorhergehenden Ansprüche ruht, wobei das Axiallager (1) auf einem ortsfesten Teil (102) der drehenden Maschine (T) aufliegt.

## Claims

1. Pad-type thrust bearing (1) comprising a ring (101) supported by a stationary structure (102) by means of a bearing formed by a film of oil (103) defined between the ring (101) and the pads (104), in which each pad (104) rests on a volume of liquid (10) enclosed in a cavity (V₄) connected to adjacent cavities by means of ducts (6), the thrust bearing (1) comprising several convex envelopes (4), each individually delimiting the cavity (V₄) and connected to one another by the ducts (6), the convex envelopes and the ducts together forming a hollow functional subassembly (2) which is dissociated from the other constituent elements of the thrust bearing (1) and which delimits a closed volume (V₂) filled with the liquid (10), **characterized in that** each envelope (4) comprises two half-shells (422, 424) arranged on either side of a flexible bladder (44) and **in that** each duct (6) comprises a flexible tube (64) inserted in a sheath (62) .

2. Pad-type thrust bearing (1) according to Claim 1, **characterized in that** the half-shells (422, 424) and the sheaths (62) are made of steel.

3. Pad-type thrust bearing (1) according to either of the preceding claims, **characterized in that** the bladders (44) and the flexible tubes (64) are made of elastomeric material.

4. Pad-type thrust bearing (1) according to one of the preceding claims, **characterized in that** the two ends (21, 22) of the functional subassembly (2) are not connected to one another.

5. Pad-type thrust bearing (1) according to one of the preceding claims, **characterized in that** it is provided with a sensor (8) which measures the pressure of the liquid (10) in the closed volume (V₂).

6. Pad-type thrust bearing (1) according to Claims 4 and 5, **characterized in that** the sensor (8) is placed on one end (21) of the functional subassembly (2).

7. Pad-type thrust bearing (1) according to Claim 4, **characterized in that** one end (21, 22) of the functional subassembly (2) is provided with a device for filling the functional subassembly (2).

8. Pad-type thrust bearing (1) according to one of the preceding claims, **characterized in that** the envelopes (4) are in the shape of a thin cylinder of axis (A₄) which has upper and lower faces delimited by two discs (429), which are horizontal when installed, and which has an annular flange (48) at its periphery.

9. Pad-type thrust bearing (1) according to one of the preceding claims, **characterized in that** the functional subassembly (2) has an overall shape which is circular, centred on an axis (Z₁) which is vertical when installed, and is located in a plane perpendicular to the axis (Z₁).

10. Rotary machine (T) comprising a rotary portion which is secured in rotation with a ring (101) resting on a film of oil (103) in contact with pads (104) of a thrust bearing (1) according to one of the preceding claims, the thrust bearing (1) pressing against a stationary portion (102) of the rotary machine (T).
